# FASCICULE DE BREVET EUROPEEN

(11) **EP 2 093 872 B1**
(45) Date de publication et mention de la délivrance du brevet: **19.10.2011**
(21) Numéro de dépôt: 09152677.2
(22) Date de dépôt: 12.02.2009
(51) Int. Cl.: H02M 1/32, H02M 5/458, H02H 7/122

(54) **Variateur de vitesse incluant un dispositif de protection contre les surintensités et les surtensions**
Geschwindigkeitsregler eine Vorrichtung zum Schutz gegen Überspannungen einschliessend
Speed controller including a device for protection against overcurrents and overvoltages

(30) Priorité: 21.02.2008 FR 0851103
(43) Date de publication de la demande: 26.08.2009
(73) Titulaire: Schneider Toshiba Inverter Europe SAS, 27120 Pacy sur Eure (FR)
(72) Inventeur: Baudesson, Philippe, 27220 La Boissiere (FR)
(74) Mandataire: Bié, Nicolas

(56) Documents cités:
- EP-A- 1 862 348
- FR-A- 2 538 187
- US-A1- 2007 147 099

## Description

La présente invention se rapporte à un variateur de vitesse doté d'un dispositif de protection contre les surintensités et les surtensions générées par des surtensions ou des sous-tensions sur le réseau électrique d'alimentation. Le document EP 1 862 348 A1 divulgue un variateur comportant toutes les caractéristiques du préambule de la revendication 1.

De manière connue, un variateur de vitesse est connecté au réseau électrique d'alimentation et destiné à commander une charge électrique. Il comporte en entrée un module redresseur de tension qui transforme une tension alternative fournie par le réseau électrique en une tension continue et qui alimente en aval un bus de puissance doté d'une ligne positive et d'une ligne négative. Un condensateur de filtrage, appelé communément condensateur de bus, est monté entre une borne positive et une borne négative du bus de puissance. En sortie, le variateur comporte un module onduleur alimenté par le bus de puissance, permettant de générer, à partir de la tension continue, une tension alternative qui peut être d'amplitude et de fréquence variables en utilisant des interrupteurs électroniques par exemple de type transistor IGBT commandés par Modulation à Largeur d'Impulsions (MLI ou PWM).

Le réseau électrique d'alimentation peut subir différents types de perturbations telles que des surtensions ou des sous-tensions. Les perturbations peuvent être de forte amplitude et de courte durée, donc faiblement énergisantes ou de faible amplitude et de longue durée, donc fortement énergisantes. Si les perturbations sont fortement énergisantes, certains composants du variateur comme les diodes du module redresseur, le condensateur de bus ou les transistors du module onduleur peuvent se détériorer soit par fort appel de courant du côté du module redresseur soit par surtension du côté du module onduleur si le condensateur de bus a une faible capacité.

Le but de l'invention est donc de proposer un variateur de vitesse permettant d'absorber les perturbations du réseau électrique sans dommage.

Ce but est atteint par un variateur de vitesse comportant :
- en entrée, un module redresseur pour générer sur un bus de puissance une tension continue à partir d'une tension alternative disponible sur un réseau électrique d'alimentation,
- un condensateur de bus connecté entre une ligne positive et une ligne négative du bus de puissance, et
- un module onduleur alimenté par le bus de puissance et commandé pour délivrer une tension alternative à une charge électrique,
- un dispositif de protection du variateur contre les surintensités liées à des variations de tension sur le réseau électrique d'alimentation (A),
**caractérisé en ce que** ce dispositif de protection comporte :
- un premier interrupteur électronique du type transistor JFET réalisé dans un matériau à grande énergie de bande interdite et placé sur le bus de puissance en série entre le module redresseur et le condensateur de bus,
- un second interrupteur électronique monté sur le bus de puissance, en parallèle du transistor JFET,
- des moyens de commande du transistor JFET et du second interrupteur électronique.

Selon une particularité, le dispositif de protection est monté sur la ligne positive du bus de puissance.

De préférence, le premier interrupteur électronique le transistor JFET est de type normalement fermé et est réalisé en carbure de silicium.

De préférence, le second interrupteur électronique est un transistor de type JFET de type normalement fermé, réalisé en carbure de silicium.

Selon une autre particularité, les moyens de commande du premier interrupteur électronique et du second interrupteur électronique sont connectés entre la ligne positive et la ligne négative du bus de puissance.

Selon une autre particularité, les moyens de commande comprennent des circuits pompe de charge aptes à appliquer des tensions de commande aux premier et second interrupteurs électroniques.

Selon une autre particularité, les moyens de commande comportent des moyens de mémorisation mémorisant une valeur seuil pour la tension mesurée aux bornes du transistor JFET au-dessus de laquelle le second interrupteur électronique est commandé à l'ouverture par les moyens de commande. Les moyens de mémorisation mémorisent également une valeur seuil pour la tension mesurée entre la ligne positive et la ligne négative du bus de puissance au-dessus de laquelle le second interrupteur électronique est commandé à l'ouverture.

Selon une autre particularité, le variateur comporte en outre un dispositif pour protéger le module redresseur contre les surtensions. Ce dispositif pour protéger le module redresseur contre les surtensions comporte par exemple un transistor de limitation de type JFET normalement fermé et une diode Zener connectés tous deux en parallèle entre la ligne positive et la ligne négative du bus de puissance. En variante, ce dispositif pour protéger le module redresseur contre les surtensions peut comporter une varistance de type GMOV connectée entre la ligne positive et la ligne négative du bus de puissance.

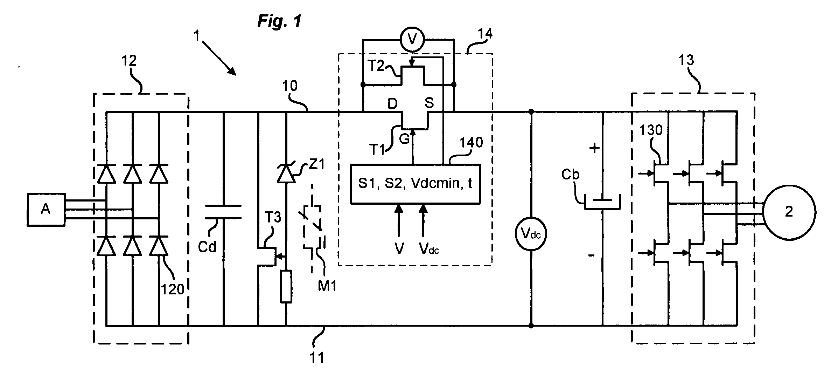

D'autres caractéristiques et avantages vont apparaître dans la description détaillée qui suit en se référant à un mode de réalisation donné à titre d'exemple et représenté par les dessins annexés sur lesquels la figure 1 représente de manière simplifiée un variateur de vitesse doté du dispositif de protection de l'invention.

En référence à la figure 1, un variateur de vitesse 1 comporte une source de tension continue qui alimente un bus de puissance avec une tension continue Vdc (par exemple de l'ordre de 200 à 800Vcc ou plus, suivant les conditions d'utilisation). Le bus de puissance est composé d'une ligne positive 10 et d'une ligne négative 11. Un condensateur de bus Cb est habituellement utilisé pour maintenir constante la tension continue Vdc du bus de puissance ou filtrer le courant découpé du bus continu gérés par le module onduleur (variateur de type "C-less"). Ce condensateur de bus Cb est connecté entre une borne positive et une borne négative du bus de puissance et est généralement de type électrolytique pour les variateurs standards ou de type film pour les variateurs de type "C-less".

Sur la figure 1, le variateur 1 comporte en entrée un module redresseur 12 qui est destiné à redresser une tension triphasée alternative provenant d'un réseau d'alimentation extérieur A (par exemple un réseau électrique triphasé 380Vac). Ce module redresseur 12 utilise avantageusement des diodes 120 qui sont plus économiques et plus fiables que des thyristors.

Le variateur de vitesse 1 comporte ensuite en sortie un module onduleur 13 permettant, à partir du bus de puissance, de commander une charge électrique 2 avec une tension alternative qui peut être d'amplitude et de fréquence variables. Le module onduleur 13 utilise pour cela une commande par Modulation à Largeur d'Impulsions (MLI ou PWM) pour commander des interrupteurs électroniques de puissance 130 montés sur chaque phase. Ces interrupteurs sont des transistors de puissance, par exemple de type IGBT, commandés par un module de commande, non représenté sur la figure 1. Sur la figure 1, le module onduleur 13 comporte trois bras pour délivrer une tension alternative triphasée à la charge électrique 2, chaque bras étant doté de deux transistors de puissance en série entre une borne positive et une borne négative du bus de puissance, soit un total de six transistors de puissance.

L'invention consiste à placer un dispositif de protection 14 dans le variateur pour le protéger contre les surintensités et les surtensions liées à des variations de tension sur le réseau électrique d'alimentation A.

Ces surintensités peuvent être générées par deux phénomènes distincts :
- lors d'une surtension, il se produit un fort appel de courant dans le condensateur de bus Cb ce qui peut causer la détérioration du pont de diodes du module redresseur 12 et une forte surtension sur le bus de puissance ce qui peut causer la détérioration du module onduleur 13 et du condensateur de bus Cb,
- lors d'un retour à la normale, après une sous-tension, il se produit également un fort appel de courant dans le condensateur de bus Cb ce qui peut causer la détérioration du pont de diodes du module redresseur 12.

Il est donc nécessaire de limiter le courant d'appel dans le module redresseur 12 pour le préserver lors d'une surtension ou après une sous-tension apparaissant sur le réseau A.

Pour cela le dispositif 14 de l'invention comporte notamment un premier interrupteur électronique de type transistor JFET normalement ouvert ou normalement fermé.

Un transistor JFET est un interrupteur électronique de puissance connu qui comporte une Grille de commande (G) dont la fonction est d'autoriser ou non le passage d'un courant entre un Drain (D) et une Source (S). Un tel transistor est dit de type normalement fermé (ou "Normally ON") si la tension V_{GS} entre la Grille et la Source est proche de zéro. Cela signifie que le chemin Drain-Source est passant ou conducteur en l'absence de tension de commande V_{GS}. Inversement un transistor JFET est dit du type normalement ouvert (ou "normally OFF") si le chemin Drain-Source n'est pas conducteur en l'absence de tension V_{GS} entre Grille et Source.

De plus, il s'avère qu'un interrupteur électronique de type transistor JFET normalement fermé offre de meilleures performances que d'autres types d'interrupteurs électroniques de puissance commandés en tension, tels que des MOSFET, des IGBT ou même des interrupteurs de type JFET normalement ouvert. En effet, un tel interrupteur présente notamment les avantages d'être plus rapide à commuter, de générer moins de pertes en conduction à l'état passant (faible résistance R_{DSon} à l'état passant), d'avoir une meilleure tenue en température et d'avoir une taille plus petite.

Le transistor JFET T1 est réalisé dans un matériau à grande énergie de bande interdite (appelé également "matériau à grand gap" ou "wide-band gap material"), c'est-à-dire présentant une faible résistance à l'état passant R_{DSon} et capable de supporter des tensions importantes (supérieures à 1000 V), comme par exemple du carbure de silicium (SiC) ou du nitrure de gallium (GaN).

Le dispositif 14 de protection de l'invention comporte donc préférentiellement un transistor JFET T1, normalement fermé, réalisé dans un matériau à grande énergie de bande interdite comme le carbure de silicium ou le nitrure de gallium. Le transistor T1 est monté sur la ligne positive 10 du bus de puissance en série entre le module redresseur 12 et le condensateur de bus Cb.

Le dispositif comporte également un second interrupteur électronique connecté sur la ligne positive 10 du bus de puissance, en parallèle du transistor T1. Ce second interrupteur électronique est un transistor T2, par exemple de type JFET, IGBT ou MOSFET. Il peut être normalement ouvert ou normalement fermé. On utilise préférentiellement un transistor T2 de type JFET normalement fermé qui, comme le transistor T1, est réalisé dans un matériau à grande énergie de bande interdite, c'est-à-dire présentant une faible résistance à l'état passant R_{DSon} et capable de supporter des tensions importantes (supérieures à 1000 V), comme par exemple du carbure de silicium (SiC) ou du nitrure de gallium (GaN).

Le dispositif de l'invention comporte des moyens de commande 140 du transistor T1 et du transistor T2. Ces moyens de commande 140 comprennent notamment des moyens de traitement pour décider de la commutation du transistor T1 et du transistor T2, des moyens de mémorisation, une alimentation destinée à la commande du transistor T1 et une alimentation destinée à la commande du transistor T2. Les alimentations employées sont par exemple des circuits pompe de charge ("charge pump circuit" en anglais) qui comprennent par exemple chacune un condensateur se chargeant à partir du bus de puissance lors de la pré-charge du circuit et une diode Zener montée en parallèle du condensateur. Il est également possible d'utiliser une alimentation externe isolée pour commander les transistors T1 et T2 mais dans ce cas les moyens de commande 140 ne sont plus alimentés directement à partir du bus de puissance et le circuit n'est donc plus autonome. Dans ce cas, il serait envisageable d'utiliser des transistors T1 et T2 de type normalement ouvert.

Selon l'invention, le transistor T1 présente par exemple une surface de carbure de silicium suffisante pour que d'une part son courant de limitation à froid (typiquement une température inférieure à 150°C) soit supérieur au courant normal requis par la charge électrique 2 et que d'autre part il puisse dissiper une énergie suffisante sans casser lors des phases transitoires de charge du condensateur de bus Cb, de surtension et de sous-tension sur le réseau électrique d'alimentation A Typiquement un JFET en carbure de silicium est capable de tenir 0.5J par mm² sans casser en court-circuit. La surface de carbure de silicium du transistor T2 doit être suffisante pour que son courant de limitation à froid soit supérieur au courant normal requis par la charge électrique 2. N'ayant pas à dissiper d'énergie, la surface de T2 peut être plus faible que celle du transistor T1. Ainsi la résistance à l'état passant R_{DSon} du transistor T1 est plus faible que la résistance à l'état passant R_{DSon} du transistor T2.

Le variateur 1 comporte en outre un condensateur de découplage Cd connecté entre la ligne positive 10 et la ligne négative 11 du bus de puissance, en aval du module redresseur 12 et en amont du dispositif de protection 14. Ce condensateur de découplage Cd sert à écrêter, sur une durée limitée, les fortes surtensions mais faiblement énergisantes apparaissant sur le réseau électrique d'alimentation A.

Selon que le variateur 1 est en pré-charge au démarrage, subit une surtension réseau ou une sous-tension, le dispositif de protection 14 du variateur 1 fonctionne de la manière suivante :

### - Au démarrage (c'est-à-dire pas de courant de charge) :

Le transistor T1 et le transistor T2 sont initialement à l'état fermé. Leur résistance à l'état passant (Rdson) est très faible. La tension V mesurée entre les bornes Drain et Source des transistors T1 et T2 en parallèle est donc également très faible. Si le condensateur de bus Cb a une faible capacité (de l'ordre de 2µF/kW), son chargement est rapide et nécessite peu d'énergie. Dans ce cas, l'appel de courant est faible et aucun des deux transistors ne passe donc en limitation. En revanche si le condensateur de bus Cb a une forte capacité (plusieurs dizaines de µF/kW), un fort appel de courant se produit à travers le condensateur de bus Cb. Le transistor T1 rentre alors dans une phase de limitation lorsque le courant qui le traverse devient supérieur à son courant de limitation. Si le courant de charge du condensateur Cb est supérieur au courant de limitation du transistor T1, le courant peut alors passer par le transistor T2. Si le courant qui traverse le transistor T2 est supérieur à son courant de limitation, le transistor T2 passe à son tour en limitation. Lorsque les transistors T1 et T2 sont tous les deux en limitation, la tension V mesurée augmente. Lorsque cette tension V devient supérieure à une première valeur seuil S1, par exemple égale à 3 Volts, le transistor T2 est commandé à l'ouverture. Ainsi tout le courant de charge passe par le transistor T1. Lors de la phase transitoire liée à la charge du condensateur de bus Cb, le transistor T1 doit également tenir la différence de tension entre la tension de sortie du module redresseur 12 et la tension aux bornes du condensateur de bus Cb. Supportant à la fois un courant et une tension, la puce en carbure de silicium du transistor T1 doit donc dissiper une forte énergie entraînant une élévation de sa température de jonction et une forte modification de sa transconductance laquelle est inversement proportionnelle à la température. La forte réduction de transconductance du transistor T1 réduit d'autant son courant de limitation pour une tension de grille donnée (typiquement pour une puce en carbure de silicium, il existe un rapport 10 entre le courant de limitation à froid et à chaud). Par conséquent, suite à une forte dissipation du transistor T1, il est nécessaire de le laisser se refroidir pour qu'il revienne à un courant de limitation à froid.

Lorsque la charge du condensateur de bus Cb est terminée, la tension V aux bornes des transistors T1 et T2 devient nulle et repasse donc sous la première valeur seuil S1. Le transistor T2 est alors commandé à la fermeture. Idéalement, le transistor T2 doit être commandé à l'ouverture dés que le transistor T1 entre en limitation, de manière à ne pas se mettre en limitation et donc à ne pas chauffer pour ne pas modifier la valeur de sa transconductance. Le transistor T2 qui n'a pas chauffé ou très peu chauffé est alors disponible pour un démarrage immédiat de la charge électrique 2 et du variateur 1 sans attendre le refroidissement du transistor T1. Le transistor T2 supprime donc l'effet mémoire thermique du transistor T1.

Sans le transistor T2, le courant de la charge électrique 2 et du variateur 1 aurait eu de fort risque d'être supérieur au courant de limitation du transistor T1. Le transistor T1 aurait alors été maintenu dans un état de limitation entraînant une intégration de l'énergie à dissiper et une élévation de sa température de jonction jusqu'à ce que survienne sa casse par court-circuit. Une fois cassé, le transistor T1 n'a plus la capacité de limiter le courant et par conséquent de protéger le variateur 1.

### - Surtension réseau

Dans le cas d'une surtension sur le réseau électrique d'alimentation A, le condensateur de bus Cb crée un fort appel de courant. Dans cette situation, la tension continue Vdc mesurée aux bornes du condensateur de bus Cb atteint alors une valeur maximale Vdcmax. Lorsque la tension Vdc est supérieure à une seconde valeur seuil S2, inférieure à Vdcmax, le transistor T2 est commandé à l'ouverture. Le transistor T2 peut également être commandé à l'ouverture si les deux transistors T1 et T2 sont rentrés en limitation et si la tension V mesurée entre les bornes Drain et Source des deux transistors a dépassé la première valeur seuil S1. Une fois le transistor T2 bloqué, le transistor T1 est commandé en linéaire par les moyens de commande 140 pour limiter le courant sur le bus de puissance de manière à réguler la tension continue Vdc à la tension maximale Vdcmax. La seconde valeur seuil S2 est choisie pour que le transistor T2 s'ouvre lors d'une surtension et qu'il reste ouvert lors de la régulation de la tension Vdc autour de Vdcmax réalisée par le transistor T1. La seconde valeur seuil S2 est par exemple égale à Vdcmax-15 Volts. Le transistor T1 supporte alors toute la surtension et dissipe lui-même toute l'énergie générée par l'augmentation de sa résistance et le passage du courant destiné à la charge 2.

Si la surtension disparaît et que le condensateur de bus Cb est entièrement chargé, la tension V aux bornes des transistors T1 et T2 s'annule et repasse donc au-dessous de la première valeur seuil S1. Le transistor T2 est alors commandé à la fermeture. Le transistor T1 peut alors refroidir car le courant de charge passe de préférence par le transistor T2. Le transistor T2 supprime alors l'effet mémoire thermique du transistor T1.

Si la surtension perdure et que le courant de limitation devient inférieur au courant de charge du fait de l'augmentation progressive de la résistance du transistor T1, le transistor T1 ne peut plus fournir le courant demandé par la charge 2 ce qui entraîne une diminution de la tension Vdc.

Si la tension Vdc remonte et que la tension V aux bornes des transistors T1 et T2 repasse sous la première valeur seuil S1, le transistor T2 est commandé à la fermeture et va permettre de soulager le transistor T1 en supprimant l'effet mémoire thermique du transistor T1.

En revanche, si la tension Vdc passe sous une valeur seuil Vdcmin, le module onduleur 13 est stoppé de manière à ne plus fournir de courant à la charge électrique 2. Il faut ensuite recharger le condensateur de bus Cb en procédant comme lors du démarrage. Lorsque le condensateur de bus Cb est entièrement chargé, le transistor T2 est commandé à la fermeture. Le module onduleur 13 est par exemple redémarré après une durée déterminée, par exemple à l'aide d'une commande de type reprise à la volée. Les deux transistors T1 et T2 sont alors à l'état fermé et le courant de charge peut passer par le transistor T2 en attendant le refroidissement du transistor T1.

Par ailleurs si la tension V aux bornes des transistors T1 et T2 se maintient à une valeur supérieure à la première valeur seuil S1 alors que la tension Vdc se maintient au-dessus de la valeur seuil Vdcmin, au-delà d'une durée t déterminée, par exemple égale à trois secondes, cela signifie que la surtension est terminée et que le courant de charge reste légèrement en dessous du courant de limitation du transistor T1. Du fait de l'effet mémoire thermique, le transistor T1 est maintenu en limitation. Pour se protéger, le transistor T1 est alors commandé à l'ouverture de sorte que la tension Vdc s'annule. Après une durée déterminée nécessaire au refroidissement du transistor T1, le condensateur de bus Cb est rechargé en procédant comme lors du démarrage. Ensuite, le module onduleur 13 est par exemple redémarré après une durée déterminée, par exemple à l'aide d'une commande de type reprise à la volée.

### - Sous-tension réseau

Durant une sous-tension sur le réseau d'alimentation du variateur, le transistor T1 est fermé et le condensateur de bus Cb se décharge si une charge électrique 2 est présente sur l'onduleur ou ne se décharge pas si aucune charge électrique 2 n'est présente sur l'onduleur. Après la fin de la sous-tension, lors du retour à une tension normale, si le condensateur de bus Cb n'a pas été déchargé, aucun appel de courant ne se produit. En revanche, si pendant la sous-tension, le condensateur de bus Cb s'est déchargé pour alimenter la charge électrique 2, le condensateur de bus Cb doit être rechargé lors du retour à une tension normale, ce qui produit un fort appel de courant à travers le condensateur de bus Cb. Dans cette situation, comme lors du démarrage, les transistors T1 et T2 passent en limitation, ce qui a pour effet de faire augmenter la tension V mesurée à leurs bornes. Lorsque cette tension V dépasse la première valeur seuil S1, le transistor T2 est commandé à l'ouverture. Le transistor T1 subit alors tout le retour de sous-tension et va chauffer.

Si le courant de limitation n'est pas inférieur au courant de charge, le condensateur de bus Cb peut se charger normalement via le transistor T1. Puis lorsque le condensateur de bus Cb est entièrement chargé, la tension V aux bornes des transistors T1 et T2 s'annule. Le transistor T2 est commandé à la fermeture et peut être employé pour faire passer le courant de charge. Il permet alors de supprimer l'effet mémoire thermique du transistor T1 qui a chauffé lors du chargement du condensateur de bus Cb.

En revanche, si le courant de limitation devient inférieur au courant de charge du fait de l'augmentation de la résistance du transistor T1, la tension Vdc diminue car le condensateur de bus Cb se décharge. Lorsque la tension Vdc devient inférieure à la valeur seuil Vdcmin, le module onduleur 13 est arrêté de manière à préserver les transistors T1 et T2. La charge électrique 2 ne reçoit plus de courant. Comme lors d'une surtension, il faut ensuite recharger le condensateur de bus Cb en procédant comme lors du démarrage. Lorsque le condensateur de bus Cb est entièrement chargé, le transistor T2 est commandé à la fermeture. Le module onduleur 13 peut être redémarré après une durée déterminée par exemple à l'aide d'une commande de type reprise à la volée. Les deux transistors T1 et T2 sont à l'état fermé et le courant de charge peut passer par le transistor T2 en attendant le refroidissement du transistor T1.

Par ailleurs, si la tension V aux bornes des transistors T1 et T2 se maintient à une valeur supérieure à la première valeur seuil S1 alors que la tension Vdc reste supérieure à la valeur seuil Vdcmin, au-delà d'une durée t déterminée, par exemple égale à trois secondes, cela signifie que la surtension est terminée et que le courant de charge reste légèrement en dessous du courant de limitation du transistor T1. Le transistor T1 est alors commandé à l'ouverture de sorte que la tension Vdc s'annule. Après une durée déterminée nécessaire au refroidissement du transistor T1, le condensateur de bus Cb est rechargé en procédant comme lors du démarrage. Ensuite, le module onduleur 13 est par exemple redémarré après une durée déterminée, par exemple à l'aide d'une commande de type reprise à la volée.

Le dispositif 14 de l'invention présente plus particulièrement un intérêt dans les variateurs dotés d'un condensateur de bus Cb de faible capacité. Le dispositif consiste à utiliser le transistor T2 pour réduire l'effet de la résistance rémanente du transistor T1 et ainsi laisser le temps au transistor T1 de refroidir.

La description ci-dessus des différentes séquences de commande est effectuée en partant d'un dispositif de protection doté de transistors T1, T2 normalement fermé. Cependant, elle doit être comprise de manière identique avec l'emploi de transistors T1, T2 de type normalement ouvert. Cependant, dans ce cas, une alimentation isolée spécifique est nécessaire dans les moyens de commande pour commander les transistors T1 et T2.

La solution de l'invention a cependant l'inconvénient de créer une forte variation d'intensité (fort di/dt) au niveau du module redresseur 12 lors de la surtension.

Pour dissiper l'énergie produite, on peut ajouter en parallèle du condensateur de découplage Cd, une varistance de type GMov M1 (montrée en traits pointillés) ou un transistor JFET T3 normalement ouvert doté en parallèle d'une diode Zener Z1. Le transistor T3 sera par exemple commandé à la fermeture en utilisant sa caractéristique d'avalanche ou à l'aide d'une commande spécifique.

## Revendications

1. Variateur (1) de vitesse comportant :
- en entrée, un module redresseur (12) pour générer sur un bus de puissance (10, 11) une tension continue à partir d'une tension alternative disponible sur un réseau électrique d'alimentation (A),
- un condensateur de bus (Cb) connecté entre une ligne positive et une ligne négative du bus de puissance, et
- un module onduleur (13) alimenté par le bus de puissance et commandé pour délivrer une tension alternative à une charge électrique (2),
- un dispositif de protection (14) du variateur contre les surintensités liées à des variations de tension sur le réseau électrique d'alimentation (A),
**caractérisé en ce que** ce dispositif de protection (14) comporte :
- un premier interrupteur électronique du type transistor JFET (T1) réalisé dans un matériau à grande énergie de bande interdite et placé sur le bus de puissance en série entre le module redresseur (12) et le condensateur de bus,
- un second interrupteur électronique (T2) monté sur le bus de puissance, en parallèle du transistor JFET (T1),
- des moyens de commande (140) du transistor JFET (T1) et du second interrupteur électronique (T2).

2. Variateur selon la revendication 1, **caractérisé en ce que** le dispositif de protection (14) est monté sur la ligne positive (10) du bus de puissance.

3. Variateur selon la revendication 1 ou 2, **caractérisé en ce que** le premier interrupteur électronique (T1) est réalisé en carbure de silicium.

4. Variateur selon la revendication 3, **caractérisé en ce que** le transistor JFET (T1) est de type normalement fermé.

5. Variateur selon l'une des revendications 1 à 4, **caractérisé en ce que** le second interrupteur électronique est un transistor (T2) de type JFET.

6. Variateur selon la revendication 5, **caractérisé en ce que** le second interrupteur électronique est réalisé en carbure de silicium.

7. Variateur selon la revendication 5 ou 6, **caractérisé en ce que** le second interrupteur électronique est de type normalement fermé.

8. Variateur selon l'une des revendications 1 à 7, **caractérisé en ce que** les moyens de commande (140) du premier interrupteur électronique et du second interrupteur électronique sont connectés entre la ligne positive (10) et la ligne négative (11) du bus de puissance.

9. Variateur selon la revendication 8, **caractérisé en ce que** les moyens de commande (140) comprennent des circuits pompe de charge aptes à appliquer des tensions de commande aux premier et second interrupteurs électroniques.

10. Variateur selon l'une des revendications 1 à 9, **caractérisé en ce que** les moyens de commande (140) comportent des moyens de mémorisation mémorisant une valeur seuil (S1) pour la tension (V) mesurée aux bornes du transistor JFET (T1) au-dessus de laquelle le second interrupteur électronique est commandé à l'ouverture par les moyens de commande (140).

11. Variateur selon l'une des revendications 1 à 10, **caractérisé en ce que** les moyens de commande (140) comportent des moyens de mémorisation mémorisant une valeur seuil (S2) pour la tension mesurée entre la ligne positive (10) et la ligne négative (11) du bus de puissance au-dessus de laquelle le second interrupteur électronique est commandé à l'ouverture.

12. Variateur selon l'une des revendications 1 à 11, **caractérisé en ce qu'**il comporte en outre un dispositif pour protéger le module redresseur (12) contre les surtensions.

13. Variateur selon la revendication 12, **caractérisé en ce que** le dispositif pour protéger le module redresseur (12) contre les surtensions comporte un transistor de limitation (T3) de type JFET normalement fermé et une diode Zener (Z1) connectés tous deux en parallèle entre la ligne positive (10) et la ligne négative (11) du bus de puissance.

14. Variateur selon la revendication 12, **caractérisé en ce que** le dispositif pour protéger le module redresseur (12) contre les surtensions comporte une varistance (M1) de type GMOV connectée entre la ligne positive (10) et la ligne négative (11) du bus de puissance.

## Claims

1. Variable speed drive (1) comprising:
- as input, a rectifier module (12) for generating a direct voltage on a power bus (10, 11) from an alternating voltage available on an electrical power-supply network (A);
- a bus capacitor (Cb) connected between a positive line and a negative line of the power bus; and
- an inverter module (13) powered by the power bus and controlled to deliver an alternating voltage to an electrical load (2);
- a protection device (14) for protecting the variable speed drive against overcurrents linked with voltage variations on the electrical power-supply network (A);
**characterized in that** this protection device (14) comprises:
- a first electronic switch of the JFET transistor type (T1) made in a wide forbidden band material and placed on the power bus in series between the rectifier module (12) and the bus capacitor,
- a second electronic switch (T2) mounted on the power bus, in parallel with the JFET transistor (T1),
- means (140) for controlling both the JFET transistor (T1) and the second electronic switch (T2).

2. Variable speed drive according to Claim 1, **characterized in that** the protective device (14) is mounted on the positive line (10) of the power bus.

3. Variable speed drive according to Claim 1 or 2, **characterized in that** the first electronic switch (T1) is made of silicon carbide.

4. Variable speed drive according to Claim 3, **characterized in that** the JFET transistor (T1) is of the normally-ON type.

5. Variable speed drive according to one of Claims 1 to 4, that the second electronic switch is a transistor (T2) of the JFET type.

6. Variable speed drive according to Claim 5, **characterized in that** the second electronic switch is made of silicon carbide.

7. Variable speed drive according to Claim 5 or 6, **characterized in that** the second electronic switch is of the normally-ON type.

8. Variable speed drive according to one of Claims 1 to 7, **characterized in that** the means (140) for controlling the first electronic switch and the second electronic switch are connected between the positive line (10) and the negative line (11) of the power bus.

9. Variable speed drive according to Claim 8, **characterized in that** the control means (140) comprise charge pump circuits capable of applying control voltages to the first and second electronic switches.

10. Variable speed drive according to one of Claims 1 to 9, **characterized in that** the control means (140) comprise storage means storing a threshold value (S1) for the voltage (V) measured at the terminals of the JFET transistor (T1), above which the second electronic switch is controlled to open by the control means (140).

11. Variable speed drive according to one of Claims 1 to 10, that the control means (140) comprise storage means storing a threshold value (S2) for the voltage measured between the positive line (10) and the negative line (11) of the power bus, above which the second electronic switch is controlled to open.

12. Variable speed drive according to one of Claims 1 to 11, **characterized in that** it also comprises a device for protecting the rectifier module (12) against overvoltages.

13. Variable speed drive according to Claim 12, **characterized in that** the device for protecting the rectifier module (12) against overvoltages comprises a limiting transistor (T3) of the normally-ON JFET type and a Zener diode (Z1), both connected in parallel between the positive line (10) and the negative line (11) of the power bus.

14. Variable speed drive according to Claim 12, **characterized in that** the device for protecting the rectifier module (12) against overvoltages comprises a varistor (M1) of the GMOV type connected between the positive line (10) and the negative line (11) of the power bus.

## Patentansprüche

1. Umrichter (1), mit:
- einem Gleichrichtermodul (12) am Eingang, um auf einem Leistungsbus (10, 11) eine Gleichspannung anhand einer Wechselspannung zu erzeugen, die in einem Stromversorgungsnetz (A) verfügbar ist,
- einem Buskondensator (Cb), der zwischen eine positive Leitung und eine negative Leitung des Leistungsbusses geschaltet ist,
- einem Wechselrichtermodul (13), das durch den Leistungsbus versorgt wird und gesteuert wird, um an eine elektrische Last (2) eine Wechselspannung auszugeben, und
- einer Schutzvorrichtung (14) des Umrichters vor Überströmen, die mit Spannungsschwankungen in dem Stromversorgungsnetz (A) in Beziehung stehen,
**dadurch gekennzeichnet, dass** diese Schutzvorrichtung (14) umfasst :
- einen ersten elektronischen Unterbrecher des Typs JFET-Transistor (T1), der aus einem Material mit großem verbotenem Energieband verwirklicht ist und in dem Leistungsbus in Reihe zwischen das Gleichrichtermodul (12) und den Buskondensator geschaltet ist,
- einen zweiten elektronischen Unterbrecher (T2), der in dem Leistungsbus zu dem JFET-Transistor (T1) parallelgeschaltet ist,
- Steuermittel (140) für den JFET-Transistor (T1) und den zweiten elektronischen Unterbrecher (T2).

2. Umrichter nach Anspruch 1, **dadurch gekennzeichnet, dass** die Schutzvorrichtung (14) in der positiven Leitung (10) des Leistungsbusses angebracht ist.

3. Umrichter nach Anspruch 1 oder 2, **dadurch gekennzeichnet, dass** der erste elektronische Unterbrecher (T1) aus Siliciumcarbid hergestellt ist.

4. Umrichter nach Anspruch 3, **dadurch gekennzeichnet, dass** der JFET-Transistor (T1) vom normalerweise geschlossenen Typ ist.

5. Umrichter nach einem der Ansprüche 1 bis 4, **dadurch gekennzeichnet, dass** der zweite elektronische Unterbrecher ein Transistor (T2) des JFET-Typs ist.

6. Umrichter nach Anspruch 5, **dadurch gekennzeichnet, dass** der zweite elektronische Unterbrecher aus Siliciumcarbid hergestellt ist.

7. Umrichter nach Anspruch 5 oder 6, **dadurch gekennzeichnet, dass** der zweite elektronische Unterbrecher vom normalerweise geschlossenen Typ ist.

8. Umrichter nach einem der Ansprüche 1 bis 7, **dadurch gekennzeichnet, dass** die Steuermittel (140) des ersten elektronischen Unterbrechers und des zweiten elektronischen Unterbrechers zwischen die positive Leitung (10) und die negative Leitung (11) des Leistungsbusses geschaltet sind.

9. Umrichter nach Anspruch 8, **dadurch gekennzeichnet, dass** die Steuermittel (140) Ladungspumpenschaltungen umfassen, die an den ersten und an den zweiten elektronischen Unterbrecher Steuerspannungen anlegen können.

10. Umrichter nach einem der Ansprüche 1 bis 9, **dadurch gekennzeichnet, dass** die Steuermittel (140) Speichermittel umfassen, die einen Schwellenwert (S1) für die an den Anschlüssen des JFET-Transistors (T1) gemessene Spannung (V) speichern, oberhalb dessen der zweite elektronische Unterbrecher durch die Steuermittel (140) in den geöffneten Zustand gesteuert wird.

11. Umrichter nach einem der Ansprüche 1 bis 10, **dadurch gekennzeichnet, dass** die Steuermittel (140) Speichermittel umfassen, die einen Schwellenwert (S2) für die zwischen der positiven Leitung (10) und der negativen Leitung (11) des Leistungsbusses gemessene Spannung speichern, oberhalb dessen der zweite elektronische Unterbrecher in den geöffneten Zustand gesteuert wird.

12. Umrichter nach einem der Ansprüche 1 bis 11, **dadurch gekennzeichnet, dass** er außerdem eine Vorrichtung zum Schützen des Gleichrichtermoduls (12) vor Überspannungen umfasst.

13. Umrichter nach Anspruch 12, **dadurch gekennzeichnet, dass** die Vorrichtung zum Schützen des Gleichrichtermoduls (12) vor Überspannungen einen normalerweise geschlossenen Begrenzungstransistor (T3) des JFET-Typs und eine Zener-Diode (Z1), die beide zwischen der positiven Leitung (10) und der negativen Leitung (11) des Leistungsbusses parallelgeschaltet sind, umfasst.

14. Umrichter nach Anspruch 12, **dadurch gekennzeichnet, dass** die Vorrichtung zum Schützen des Gleichrichtermoduls (12) vor Überspannungen einen Varistor (M1) des GMOV-Typs umfasst, der zwischen die positive Leitung (10) und die negative Leitung (11) des Leistungsbusses geschaltet ist.
